(19) **Europäisches Patentamt**
**European Patent Office**
**Office européen des brevets**

(11) **EP 3 229 466 A1**

(12) **EUROPEAN PATENT APPLICATION**

(43) Date of publication:
**11.10.2017 Bulletin 2017/41**

(51) Int Cl.:
*H04N 7/173* (2011.01)  *G06Q 30/02* (2012.01)
*H04N 21/258* (2011.01)  *H04N 21/262* (2011.01)
*H04N 21/2668* (2011.01)  *H04N 21/442* (2011.01)
*H04N 21/458* (2011.01)  *H04N 21/466* (2011.01)
*H04N 21/475* (2011.01)  *H04N 21/482* (2011.01)
*H04N 21/81* (2011.01)

(21) Application number: **17168836.9**

(22) Date of filing: **21.01.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.02.2010 EP 10153751**
**07.04.2010 EP 10159235**

(62) Document number(s) of the earlier application(s) in accordance with Art. 76 EPC:
**11701653.5 / 2 537 338**

(71) Applicant: **FUNKE Digital TV Guide GmbH**
**10117 Berlin (DE)**

(72) Inventors:
• **Zier, Thomas**
**13465 Berlin (DE)**

• **Rosengart, Frank**
**13088 Berlin (DE)**

(74) Representative: **Eisenführ Speiser**
**Patentanwälte Rechtsanwälte PartGmbB**
**Anna-Louisa-Karsch-Strasse 2**
**10178 Berlin (DE)**

Remarks:
•This application was filed on 28-04-2017 as a divisional application to the application mentioned under INID code 62.
•A request for correction in claim 15 has been filed pursuant to Rule 139 EPC. A decision on the request will be taken during the proceedings before the Examining Division (Guidelines for Examination in the EPO, A-V, 3.).

(54) **ADAPTIVE PLACEMENT OF AUXILIARY MEDIA IN RECOMMENDER SYSTEMS**

(57) The present invention relates to an apparatus, method, and computer program product for controlling a recommender system, wherein placement of auxiliary media in relation to at least one content item presented to a user is controlled. A first scheduler (111) is provided for scheduling the at least one content item based on a user profile obtained from a recommender system. Additionally, a second scheduler (118) is provided for scheduling placement of the auxiliary media in response to the first scheduler (111), wherein the second scheduler (118) is adapted to receive information about a scheduled content from the first scheduler (111) and to decide which auxiliary media to place into a presentation space based on the received information.

Fig. 1

## Description

FIELD OF THE INVENTION

The present invention relates to an apparatus, a method and a computer program product for controlling placement of auxiliary media (e.g., auxiliary audio, video or text information related to a personalized channel or content item and used for user support, advertisement or the like.

BACKGROUND OF THE INVENTION

The use of recommender technology is steadily being introduced into the market. Among various examples, websites offer a recommender to support users in finding content items (e.g. movies) they like, and electronics devices (e.g. personal video recorders) use a recommender for automatic filtering content items. Recommender systems are increasingly being applied to individualize or personalize services and products by learning a user profile, based on feedback from the user on selected content items (e.g. books, songs, television (TV) programs, movies, etc.) and use machine learning techniques to infer the ratings of new items.

A recommender typically learns the preference of a user, based on ratings that the user supplies on items. These ratings are typically binary classifications, such as "like" and "dislike", respectively, or are based on a more elaborate classification into a range of like-degrees. As such, user rating provides an interface by which the user teaches the recommender about his preferences. This learning process is tedious in the sense that the user has to rate a considerable number of items before the recommender can make sensible suggestions. Recommender systems typically require feedback from a user to learn the user's taste. This feedback may be provided explicitly or implicitly. Explicit feedback consists of a user providing ratings for a number of items, i.e. on a five-point scale or in a binary like/dislike form. Implicit feedback comes from observing user actions such as purchases, downloads, selections of items for playback or deletion, etc. The user actions are then interpreted by the recommender system and translated into a scoring. For example, typically, recommender systems interpret a purchase action as positive score, or, in case of video items, a total viewing duration of more/less than 50% may imply a positive/negative score.

Throughout the following it will be distinguished between "ratings" which are given by the user on content items and "scores" or "scoring" which are generated by the recommender system.

Techniques commonly used are collaborative filtering and naïve Bayesian classification. Thereby, from a vast amount of content items, only those items a user (or a group of users) likes or prefers can be retrieved. Recommenders are typically offered as a stand-alone service or unit, or as an add-on to an existing service or unit. They increasingly appear in consumer devices, such as TV sets or video recorders.

It is advertisers' desire to make sure that the right people are watching their advertisements ("ads"). Television advertisers spend lots of effort trying to make sure their advertisements are aired during television shows having the proper demographics. Thus, television advertisers attempt to match the ad to the demographics of the audience for particular television programs, purchasing advertising slots for those television programs that they hope will attract the proper audience for their ads. Unfortunately, there is no way for the advertisers to know in real time whether people are watching their ads or whether the ads are reaching the targeted demographic groups. Similarly, there is no way for television advertisers to determine the viewing patterns of individual viewers or to target ads to individual viewers since the same ads are broadcast to everyone watching a particular program.

The WO2002/033975 discloses a system and method for placing ads on a client-side video replay system. A client is allowed to make a determination of ad placement priority separately from the function of serving ads to a requesting application. A dynamic ad placement engine reorders ads when the context of the system is changed to yield a next ad to be placed. Thus, at a later time, when an application sends an ad request, the dynamic ad placement engine can quickly respond with the ad to be placed. The ads also are preferably reordered after an ad is placed. Moreover, placement of ads is controlled by interpreted rules for each ad. This solution provides a way to deliver ads to receptive audiences where the decision is sensitive to the context in which the ad request was made and where ads can be placed extremely quickly for each individual user.

SUMMARY OF THE INVENTION

It is an object of the present invention to provide an improved placement of auxiliary media, by means of which signalling and processing load as well as storing amount associated with the placement process can be reduced.

This object is achieved by an apparatus as claimed in claim 1, a method as claimed in claim 21, and a computer program product as claimed in claim 22.

It is suggested to provide an apparatus for controlling placement of auxiliary media in relation to at least one content item presented to a user. Auxiliary media and the content item differ from each other by e.g. their content or their source.

The apparatus comprises:

    a) a first scheduler (111) for scheduling said at least one content item based on a user profile obtained from a recommender system; and
    b) a second scheduler (118) for scheduling placement of said auxiliary media in response to said first scheduler (111),

c) wherein said second scheduler is adapted to receive information about a scheduled content from said first scheduler and to decide which auxiliary media to place into a presentation space based on said received information.

In other words: for both, content items and auxiliary media, each a specialized scheduler is provided. The first scheduler acts as a content scheduler whereas the second scheduler acts as an auxiliary media scheduler. The information about a scheduled content is information describing the content item. Thus, the second scheduler can base its decision which auxiliary media is to be placed into a presentation space based on a description of said content item.

Likewise, a method of controlling placement of auxiliary media in relation to at least one content item presented to a user is suggested. The method comprises the steps of:

a) scheduling said at least one content item in a first scheduler based on a user profile obtained from a recommender system;

b) receiving from said first scheduler information about a scheduled content; and

c) deciding in a second scheduler based on said received information which auxiliary media to place into a presentation space.

Accordingly, the proposed placing approach provides an efficient and optimized placing of the auxiliary media, which is coupled to a content scheduler of a recommender system. Thereby, placement can be controlled and optimized at the client side to a large extent, so that signaling and processing load can be reduced.

According to a preferred embodiment, the second scheduler is adapted to initiated downloading of auxiliary media to be placed in relation to a specific content item and to discard further auxiliary media not to be placed in relation to the specific content item. Accordingly, the amount of auxiliary media to be stored at the client side can be reduced significantly, as only matching items of the auxiliary media are stored locally and can be deleted based on the actual stream of presented content items and thus the real watching behaviour of a user.

According to another preferred embodiment that can be combined with the previously noted preferred embodiment, the second scheduler is adapted to process meta data related to said content item and decide which auxiliary media to place into a presentation space based on said meta data.

According to a first aspect, the second scheduler may be adapted to map a video advertisement to a predetermined event of a scheduled content and to insert the video advertisement into a content channel as visible programming.

According to a second aspect which can be combined with the first aspect, the second scheduler may adapted to map a video advertisement to a predetermined event or channel of a scheduled content and to replay the video advertisement before or after the event or channel.

According to a third aspect which can be combined with the first or second aspect, the second scheduler may be adapted to detect a trigger event and to insert an item of the auxiliary media to a target object of a content channel in response to a detected trigger event.

According to a fourth aspect which can be combined with any one of the first to third aspects, the trigger event may comprise at least one of a recording of a content item, a deletion of a content item, and an arrival of a new object of the auxiliary media for placement.

According to a fifth aspect which can be combined with the third or fourth aspect, the target object may comprise a single show or event within the content channel.

According to a sixth aspect which can be combined with any one of the first to fifth aspects, the second scheduler may be adapted to allocate a priority to items of the auxiliary media based on at least one of targeting information, a prioritization information, a factoring information and a popularity information.

In a first specific example of the sixth aspect, the popularity information may be determined based on a user rating or by measuring a dropping or watching rate of an item of the auxiliary media.

In a second specific example of the sixth aspect, which may be combined with the above first specific example, the prioritization information may be determined based on at least one of a watching behaviour of a user in a target channel, a coefficient of popularity, an expected click-through rate, and an expected return.

According to a seventh aspect which can be combined with any one of the first to sixth aspects, the second scheduler may be adapted to store information about the number of placements of an item of the auxiliary media in a content channel.

According to an eighth aspect which can be combined with any one of the first to seventh aspects, the second scheduler may be adapted to determine a relevance coefficient which indicates relevance of an item of the auxiliary media, and wherein the item with the highest relevance coefficient is used for placement.

According to a ninth aspect which can be combined with any one of the first to eighth aspects, the apparatus may be adapted to record events of the content items and to create new content channels, and wherein the second scheduler may be adapted to determine a location for placement and an item of the auxiliary media that fits in a determined location if placement is allowed.

According to a tenth aspect which can be combined with any one of the first to ninth aspects, the second scheduler may be adapted to suppress placement of an item of the auxiliary media if the item has been placed and watched more than a predetermined number of times.

According to an eleventh aspect which can be combined with any one of the first to tenth aspects, the second scheduler may be adapted to control the placement of the auxiliary media based on at least one of content profile information and auxiliary media profile information, obtained from a source of the auxiliary media.

According to a twelfth aspect which can be combined with any one of the first to eleventh aspects, the second scheduler may be adapted to store first identification information for identifying an item of the auxiliary media and second identification information for identifying a content channel.

According to a thirteenth aspect which can be combined with any one of the first to twelfth aspects, the second scheduler may be adapted to adopt a ratio between the auxiliary media and the content items for each content channel, wherein the placement of the auxiliary media is scheduled based on the determined ratio. The ratio to be adopted by the second scheduler can be determined by the second scheduler itself or by means of a central server that transmits the ratio to each second scheduler in a server-client-network.

According to a fourteenth aspect which can be combined with any one of the first to thirteenth aspects, the second scheduler may be adapted to delete an item of the auxiliary media when a predetermined lifecycle has expired, and wherein the second scheduler (118) may be adapted to suppress the deletion if the item is marked with a predetermined information indicating that the item is to be kept.

According to a fifteenth aspect which can be combined with any one of the first to fourteenth aspects, the second scheduler may be adapted to skip an item of the auxiliary media in response to input information received from a user interface.

According to a sixteenth aspect which can be combined with any one of the first to fifteenth aspects, the second scheduler may be adapted to initiate download of an item of the auxiliary media when the item has been determined as a matching item for placement, and wherein the second scheduler may be adapted to delete the item when an expiration time of a matched content item has expired.

It is noted that the above apparatus can be implemented as discrete hardware circuitry with discrete hardware components, as an integrated chip, as an arrangement of chip modules, or as a signal processing device or computer device or chip controlled by a software routine or program stored in a memory.

## BRIEF DESCRIPTION OF THE DRAWINGS

The invention will now be described, by way of example, based on embodiments with reference to the accompanying drawings, wherein:

Fig. 1 shows a schematic block diagram of a recommender system with content scheduler and auxiliary media scheduler according to an embodiment;

Fig. 2 shows a main flow diagram for a placement process according to an embodiment;

Fig. 3 shows a flow diagram of a first placement sub-process of the embodiment;

Fig. 4 shows a flow diagram of a second placement sub-process of the embodiment;

Fig. 5 shows a flow diagram of a third placement sub-process of the embodiment;

Fig. 6 shows a flow diagram of an overlay placement process according to an embodiment; and

Fig. 7 shows a flow diagram of a banner placement process according to an embodiment.

## DESCRIPTION OF EMBODIMENTS

Embodiments of the present invention will now be described based on an exemplary recommender system which generates ratings and scorings on content items, such as books, TV programs, movies, etc., and which allows scheduling of content and auxiliary media. Although, in the following embodiments, placement of video, audio or text ads is described, the present invention is not limited to such types of auxiliary media and can be used for any other auxiliary media that can be inserted or added for other purposes, such as user support or guidance, etc.

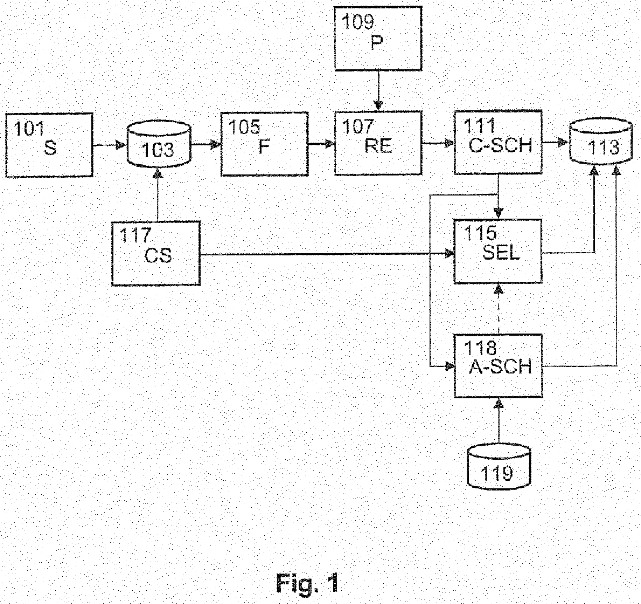

Fig. 1 shows a schematic block diagram of a recommender system which comprises an information data store 103 connected to a source (S) 101. The source 101 may, for example, be an electronic program guide (EPG) service on the Internet, which provides information data on TV programs. The information data store 103 can be connected to at least one filter (F) 105 which is associated with a personalized content channel. It is noted that any number of personalized content channels could be provided. The output of the filter 105 is connected to a respective recommender engine (RE) 107. Thus, each personalized content channel may have an own recommender engine 107 associated therewith. Each recommender engine 107 and hence personalized content channel has a profile (P) 109 associated therewith. The output of the recommender engine 107 is connected to a content scheduler (C-SCH) 111. The content scheduler 111 is connected to a storage device 113 (e.g. a set of hard disk drives), and to a selector (SEL) 115. The information data store 103 is also connected to a content source (CS) 117. The content source 117 provides for example at least audio/video information in a broadcasting or on-demand fashion. In addition, the content source 117 may provide information data, e.g. EPG information inside the vertical blanking interval of the video signal, or MPEG-7 metadata on segments of a particular content item (e.g. the scene boundaries of a movie). The content source 117 is connected to the selector 115 comprising at least one set of content isolation means (e.g. a tuner or the like) allowing to isolate one or more content items for recording on the storage device 113. The output of the selector 115 is connected to the storage device 113.

Additionally, an auxiliary media scheduler (A-SCH) 118 is provided, which is also connected to the storage device 113 so as to place selected or scheduled auxiliary media (e.g. ads) in a content channel in association with a matching content item or event. The placement of the auxiliary media at the auxiliary media scheduler 118 is based on output information of the content scheduler 111. Optionally, the auxiliary media scheduler 118 can be connected also to the selector 115, to allow placement of auxiliary media into selected content items at the selector 115 already. Auxiliary media items to be placed can be derived from an auxiliary media storage (e.g. a set of hard disk drives) 119 into which auxiliary media data may be downloaded e.g. via the Internet from suppliers (e.g. advertisers) of auxiliary media.

The operation of the apparatus of Fig. 1 will now be described. Information data of a current content item to be played out on a personalized content channel is gathered from the source (Internet) 101 or obtained via other means, e.g., via transmission in the vertical blanking interval of an analogue TV broadcast signal or via digital video broadcast (DVB) transport streams, or combinations of any of the above. A content item may be a TV program, data stream containing video and/or audio data or a segment of a program etc.

The information data may comprise a plurality of attributes and attribute values associated with a content item such as title, actors, director and genre. Each profile 109 is based on the information data together with data indicating the "like" or "dislike" of the user. The rating of a "like" and "dislike" can be based on feedback on content items that pass the associated filter 105. This feedback can be given as explicit rating by the users that use the particular personalized content channel. The ratings can be made in several ways. For example, the user can, using a remote control device, indicate for a currently selected content item or a given attribute of the current content item his rating ("like" or "dislike") by pressing appropriate buttons on a user interface (e.g. the remote control device). Alternatively, the behaviour of the user can be observed, so that fixed rules for all users can be replaced by rules that are "learned" and personalized for each user. In a more advanced setting, a "like" degree on a discrete or continuous scale can be provided or calculated instead of just a "like" or "dislike" classification.

When information data of a content item passes the filter 105, this information data is forwarded to the recommender engine 107. The recommender engine calculates a "like" degree or rating, based on its associated profile 109, for this subsequent content item. The information data associated to the subsequent content item is then forwarded, along with the computed rating, to the scheduler 111, which subsequently computes a recording schedule that will be used to schedule the recording of content items offered by the recommender engine 107 onto the storage device 113. In particular, the scheduler 111 may primarily consider the content items of high like degree or rating while still considering sufficient new content for each personalized content channel.

To this end, the recording schedule computed by the scheduler 111 is used to instruct the selector 115 to select the content items available from the content source 117 to record them on the storage device 113.

Use or user profiles can be derived using implicit profiling and explicit profiling. Implicit profiling methods derive content use profiles unobtrusively from the user's use histories, e.g., sets of TV shows watched and not watched. Explicit profiling methods may derive content use profiles by letting the user specify ratings on the level of content items. A user interface (not shown) may be provided, which may be for example a remote control or any other type of control device by which the user can control use of a content item. The user interface may also be implemented on a display screen that a user can interact with, e.g. a touch screen.

The recommender system of Fig. 1 can be adaptable and scalable to all kinds of auxiliary media input from various suppliers. The auxiliary media scheduler 118 may for example be adapted to schedule infomercial-type long-form ad content with simple call-to-action or transaction functionality (order brochure etc.). Branded channels may be formed by providing advertiser videos with call-to-action or transaction (text-based) functionality. Additionally, banners may be scheduled by placing them on an EPG or pay-TV user interface pages or by providing links to editorial and branded channels or to pre-recorded videos. A priority campaign may be initiated by scheduling prioritized and prominent display of a video ad or branded channel on a "start page" (if any) with preloaded content e.g. in the storage device 113. As an additional option, pre-, mid- and/or post-roll placement may be scheduled by replaying short ads before, during (at predefined cutting points) or after an event. As a further option, overlays may be scheduled over video ads so as to trigger links and/or transactions. The scheduled auxiliary media may be a static digital placement that will be displayed on a player's screen whenever the user pause a video clip, a graphic that slides over the bottom of the video-viewing screen without interrupting the clip, an ad that occupies only a portion of the displayed frame, e.g., the lower 33% of the frame (placement in the lower third ensures that the face of an on-air person is not obscured), or an ad (e.g. an overlay) that on interaction "telescope" a viewer to a longer-form video or a branded channel.

Besides the personalized channels that are based on the output of the recommender 107, editorial or managed channels may be provided. Their content is the same for all users and can be created through the user interface. A user may subscribe to a branded advertiser channel which will then be enriched by the auxiliary media scheduler 118. Auxiliary media suppliers (e.g. advertisers) may get creative freedom by allowing for flash or markup languages. Videos that match user profile or targeting requirements can be pushed by the auxiliary media scheduler 118 to the storage device 113 - even if a channel is not subscribed.

Branded channels can be created through the auxiliary media scheduler 118 by bundling single videos to a channel and defining at least one of channel name, channel description, channel logo, channel settings, number of videos (i.e. size of channel in programs), sequence of videos (i.e. playback order), filter settings of the channel, channel profile locking.

Additionally, the auxiliary media scheduler 118 may place overlays including call to action in running video ads, e.g. through banners on different pages that are targeted by user behavior, through proper display in a "suggested channels" list (requires a recording engine for channels.

Video ads scheduled and placed by the auxiliary media scheduler 118 may comprise so-called "infomercials (i.e. a long-form video that is mapped to events and inserted into channels as visible programming, as opposed to "invisible" pre- and post-roll ads) and pre-roll or post-roll ads (i.e. short video ads that are not visible in the channel and replayed before or after an event).

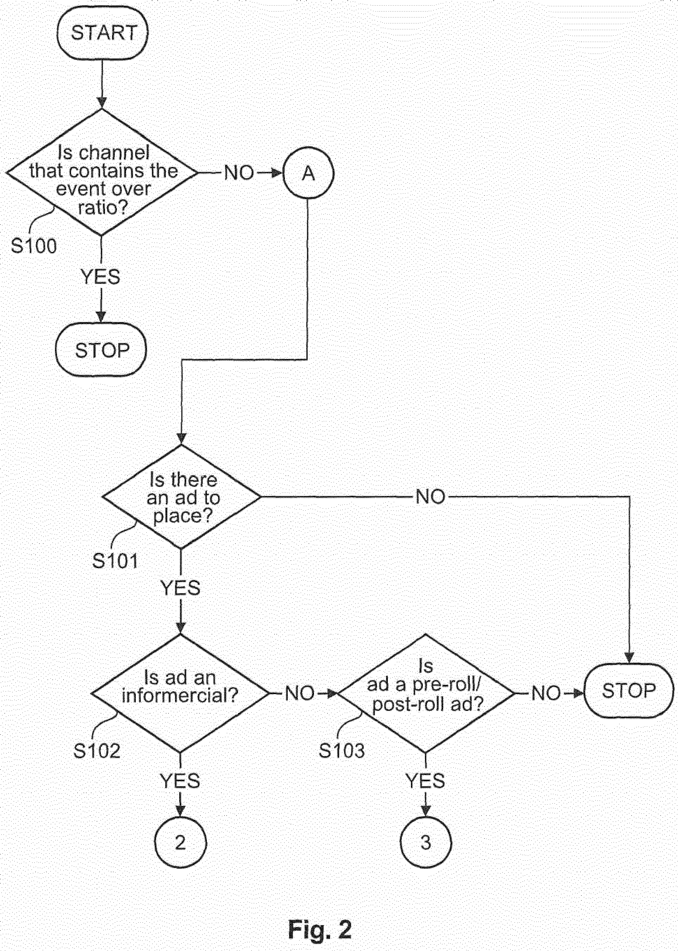

Fig. 2 shows a flow diagram of a main placement process of the auxiliary media scheduler 118 for a video ad placement, wherein a logic for video ad insertion adjacent to an event in a channel is provided.

The process of Fig. 2 can be triggered when the recommender 107 or another content managing function at the client side has identified a triggering event to perform ad insertion for a target object. The target object may be a single show or event within a content channel scheduled by the content scheduler 111. Triggering events on the client side may be recording of a show (e.g. when recording has started) or deletion of a show (e.g. once recording has started). On the server side, a triggering event may be arrival of new ads for placement. The auxiliary media scheduler 118 may receive from the content scheduler 111 for all channels the confirmed and scheduled content items (e.g. shows) and may then decide which ads it has to fetch into the advertising space and place them in the playlist of the corresponding channels when the recording of the target content event has started.

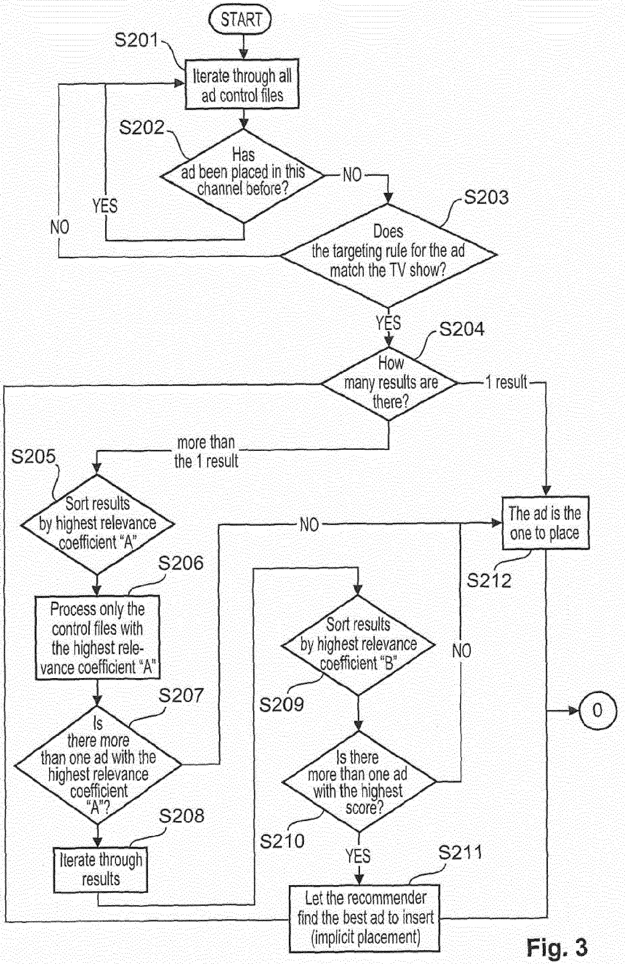

In step S100 it is checked whether the channel of the target content event contains a predetermined event over ratio, which means that a maximum ratio between placed ads and events has already been reached. If so, no ad is placed and the procedure ends here. If the ratio has not yet been reached, the procedure continues with a sub-process A (which is detailed in Fig. 3) and in which the ad to be placed with the content is identified.

Identification may be based on a ranked list of highest value ads, which may be generated by combining targeting information from advertisers with prioritization measures from the server side, factoring in commercial, aggregate popularity, etc. Alternatively, the ad may be placed implicitly by a recommender (e.g. the recommender 107), wherein the same rules may apply for content placement and ad placement.

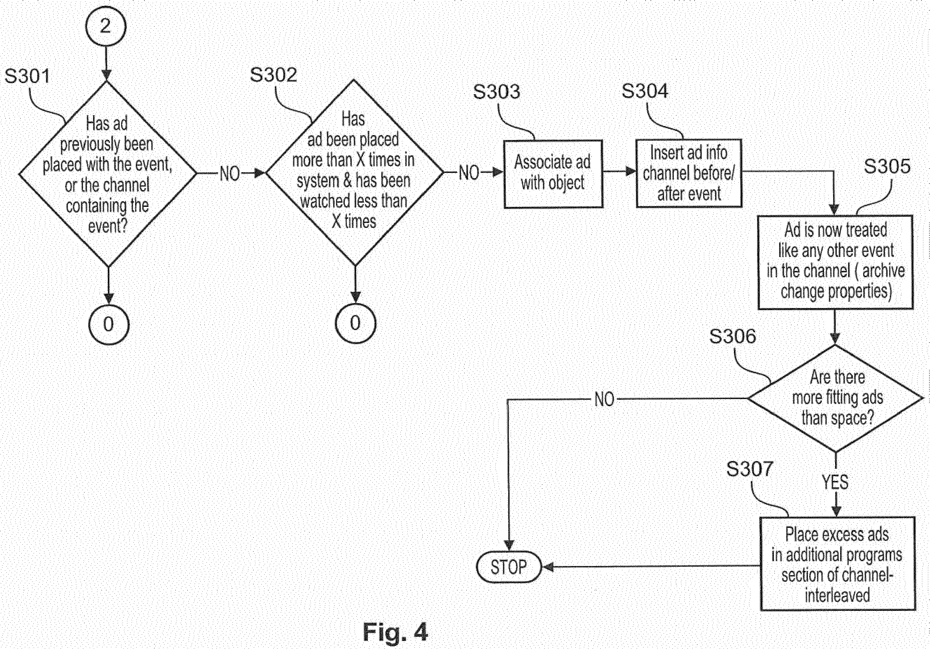

In step S101 it is checked whether an ad is provided for placement. If not, the procedure ends. If an ad to be placed is determined in sub-process A, it is checked in step S102 whether the ad is an infomercial. If so, the procedure proceeds to branching point "2" where the sub-process of Fig. 4 is initiated.

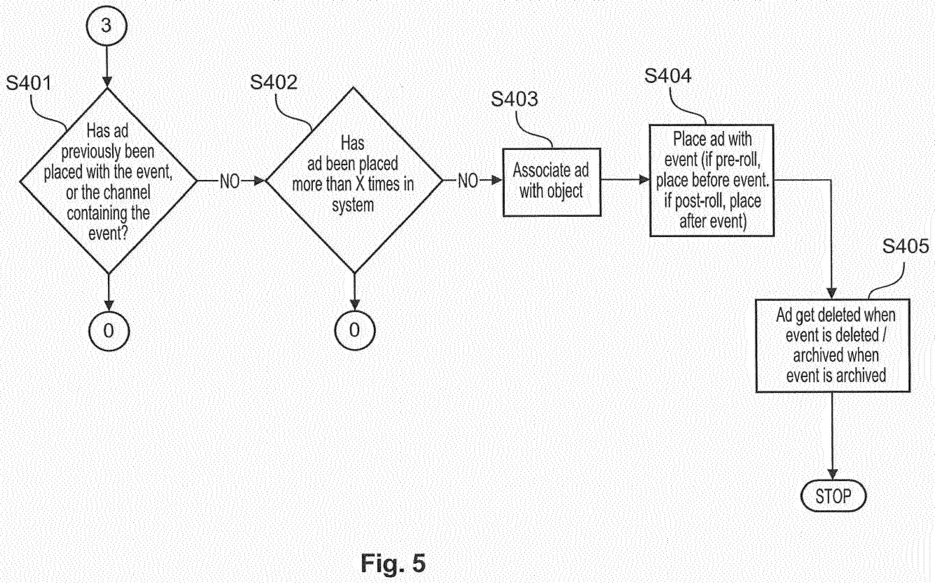

If the ad is not an infomercial, the procedure proceeds to step S103 where it is checked whether the ad is a pre-roll or post-roll ad. If so, the procedure proceeds to branching point "3" where the sub-process of Fig. 5 is initiated. If not, the procedure ends.

Fig. 3 shows a flow diagram of the sub-process A of Fig. 2 for explicit or static placement of ads by the auxiliary media scheduler 118 on the client side. Initially, in step S201, an iteration through all ad control files (which specify individual ads to be processed) is initiated. At this point, the recommender 107 may have notified the server side that a new show has been recorded and/or added to the channel. Then, in step S202, it is checked whether the ad has been placed in this channel before. If so, the procedure jumps back to step S201. Information about how many times an ad has already been placed in the channel may be kept until the ad is no longer in use (e.g. until the extended markup language (XML) for the ad is no longer broadcast). This marks the end of the ad's lifecycle. If it has not been placed yet in this channel, the procedure proceeds to step S203 where it is checked whether the targeting rule for the ad matches the targeted TV show. If not, the procedure jumps back to step S201.

If the targeting rule is determined to be matching, the number of results (i.e. potential ads to be placed) are checked in step S204. If the number of results is "1", the single ad is determined as the one to be placed and the sub-process ends, i.e., the process of Fig. 2 is continued at step S101. Otherwise, if the number of results is larger than "1", the procedure proceeds to step S205 and the results are sorted according to an allocated relevance coefficient "A". This may be an integer number ranging from 0 to 100 and indicating the relevance of the ad (e.g. the larger the number, the higher the relevance, or vice versa). Then, in step S206, only those control files with the highest relevance coefficient "A" are processed. In the subsequent step S207, it is checked whether there is more than one ad left with highest relevance coefficient "A". If not, the procedure branches to step S212 where it is determined that the single remaining ad is the one to be placed.

Otherwise, if more than one ad is left, an iteration through the remaining results is initiated in step S208. In the subsequent step S209, the remaining results are sorted according to another allocated relevance coefficient "B". Then, it is checked in step S210 whether more than one ad with highest score remains. If not, the procedure branches to step S212 and the remaining as is determined as the one to be placed. Otherwise, if more than one ad with highest score remains, the recommender may determine in step S211 the best ad to be placed, e.g., based on an implicit placement. Finally, when the sub-process of Fig. 3 ends, the procedure continues with step S101 of Fig. 2.

In an alternative embodiment, a one step relevance sorting process is provided wherein there is no branch at step S207. Instead, steps S208 to S210 are always performed in order to determine both, coefficient "A" and coefficient "B" for each result. In addition, a weight factor is applied to the coefficients, namely a factor of 100 for each coefficient A and a factor of 10 for each coefficient "B" thus obtained. Then, the weighted coefficients are added to form a single relevance coefficient C:

$$C = A*100 + B*10.$$

The choice of a respective weight factor, e.g. 100 and 10, is exemplary. Other factors can be applied as well.

Implicit ad placement may occur "on the fly", i.e. as events are recorded and channels are created on the client side. When a new event or channel is created or added, the recommender (which may be part of the auxiliary media scheduler 118 or the recommender 107) determines whether the specified rules allow for placement of an ad. If ad placement is allowed, the recommender determines the location in which to place the ad, and then attempts to find an ad that fits in that location.

Inserting of long-form video ads (infomercials) in personalized channels can be based on advertising at least one of metadata, campaign information and available ad real estate, where the client side requests video ads to be downloaded from the server side. Infomercials are matched to events, wherein a video is assigned to a matching event and may be positioned e.g. in front of it in the channel listing and after an event in the news type of channels. Once placed, they can be treated like any other event in the channel, as a "normal TV show".

Fig. 4 shows a flow diagram of an infomercial placement sub-process initiated at branching point "2" in Fig. 2. In step S301 it is checked whether the ad has been placed already with the target event or the channel containing the event. If so, the procedure ends. If not, it is checked in step S302 whether the ad has been placed more than a predetermined number X of times in the system, but has been watched less than the predetermined number X of times. If so, the procedure ends. If not, the ad is associated in step S303 with the target object and inserted in step S304 into the channel, e.g., before or after the event. In step S305 it is determined that the ad is now treated like any other event in the channel and change properties may be archived. Then, it is checked in step S306 whether there are more fitting ads to be placed than available space. If not, the procedure ends. If so, excess ads are placed in additional programs section of the channel, e.g. the excess (i.e. not placed) ads may be listed interleaved at the top of the additional programs list. Then, the procedure ends.

Explicit targeting may be achieved by sending placement rules and/or EPG data used to place an ad to the client side. Implicit targeting may be achieved by sending metadata only, while the recommender places the ad. Insertion by the auxiliary media scheduler 118 may then based on static and dynamic criteria specified by suppliers of the auxiliary media (e.g. advertisers) through a rigid filter (static criteria) or through the use of a self-learning and/or artificial intelligence (AI) capabilities provided by the recommender (dynamic criteria). Optionally, the relevance for the user (as determined by the recommender) may be combined with criteria and assigned priority from the server.

Metadata may be comprise a content profile, where advertisers specify metadata combinations (e.g. through logical operations like AND and OR) to which they want to target the video. Any metadata field can be targeted in any combination and multiple combinations may be possible. Additionally, metadata may comprise an ad profile, where they are required to describe an ad in order to allow the recommender to "learn" what types of ads are popular with user etc., and an ad description which describes the ad for use in the EPG and which may comprise a title, subtitle, description, genre, keywords etc., while targeting may be related to any one of the above mentioned types of metadata.

At the user interface, at least one of title, subtitle, description, a thumbnail, and a duration information may be displayed. Additionally, the content profile related metadata may comprise at least one of type of product, industry, advertiser/company name, brand, agency, director, mood, genre, target demographic (e.g. in terms of age, region, income level or gender), and standard.

If more than one ad fits in an available spot or placement space, the system has to determine which ad to place based on certain prioritization and optimization rules. In order to make a placement decision the system (e.g. the auxiliary media scheduler 118) generates priority and relevance values that may factor in at least one of expected return, relevance, user history (the ad of a brand/type that the user has been responsive to in the past), preferred or higher-paying campaigns, and campaign management (on server-side), e.g., advertiser budget. If the advertiser budget has already been reached (or is close to being reached according to trends), an ad is no longer placed.

The recommender may "remember" what ads are watched and which are skipped to determine probability of an ad being watched (e.g. if multiple matching ads are provided and only one is determined to be inserted). Additionally, an ad popularity may be measured by counting how often the ad has been displayed vs. watched (equivalent to a click-through-rate) and/or by counting how often the ad has dropped out of channel without being watched. As an additional option, the users may be allowed to rate ads like every TV show (e.g. thumb up/down). If an ad is disliked, it is removed from the channel. This creates potential space for a new ad to be placed in the channel (not necessarily in the same position). As a further option, if a specific ad has been watched once, priority for displaying the ad again in another channel can be decreased and/or the ad can be prevented from being displayed again in same channel. Then, priority for "similar" ads (same advertiser, same industry, same metadata criteria) can be increased. Furthermore, the recommender can memorize a viewing history with the same ruleset as the TV shows.

A predetermined maximum ad/content ratio can be set for each channel, e.g. 1:4 which means one ad can be placed for up to four shows. If there are more than 4 shows there can be 2 ads, etc. If the maximum ratio has not been reached, a matching ad is automatically inserted in the channel. If the maximum ratio has been reached, the recommender needs to prioritize. "Additional programs" could be used as "overflow" for not placed ads (interleaved).

Prioritization may be based on a coefficient of popularity, expected click-through-rate (CTR) to expected return. The expected CTR can be determined from previous user behavior and aggregate data from all users. If an ad has been watched, it should not be replaced unless it is deleted. If it is deleted, it can be replaced with a new ad. Furthermore, ad deletion cycles may be introduced, wherein an ad (video) may be subject to the same lifecycle as any "normal" TV show in a channel. That means if a channel deletes programs after a predetermined time period (e.g. one week), the ads are also deleted after this predetermined time period.. If a channel allows no more than a predetermined number of events, the ads can be deleted alongside other events once this number has been reached. An exception to this rule could be that if a user marks an ad as "Keep", the system will not delete it. In this case, it is up to the user to delete the ad. If a campaign ends, all ads that are part of that campaign may be deleted. Again, ads that are marked as "Keep" are exceptions and will not be deleted.

As alternative approach, deletion of ads may be allowed when the campaign is ended or a functionality may be provided for controlling the deletion cycles.

As another option, a skip function may be provided, where the user may loop through different commercials as long as a predetermined playback time is reached, e.g. until the today's playback time of commercials is at least 10 seconds.

Short-form ads can be inserted in the channel before (pre-roll) or after (post-roll) an event. In the case of online video there may be cutting points provided for mid-roll advertising (insertion during playback). Insertion, placement and prioritization may follow the same rules as for infomercials. Videos may inherit the lifecycle of the targeted event. However, pre- and post-roll ads may not be regarded as "normal" TV shows once inserted, and may be "invisible" in channel playlist (e.g. no thumbnails). If a related event is deleted, ads may be deleted, and/or if a related event is archived, ads may be archived. A possible number or ratio of maximum ads per channel may be defined.

Pre-roll and post-roll ads do not interfere with or exclude other ad forms. E.g., an event with an associated infomercial can also have a pre-roll and/or post-roll ad.

Fig. 5 shows a sub-process of placing and lifecycle control of pre-roll or post-roll ads, which starts at the branching point "3" of Fig. 2. In step S401 it is checked whether the ad has been already placed with the event or the channel containing the event. If so, the procedure ends. If not, the procedure proceeds to step S402 where it is checked whether the ad has been placed more than a predetermined number X of times in the system. If so, the procedure ends. If not, the ad is associated in step S403 with the target object and is then placed in step S404 with the event, e.g. before or after the event. Finally, it is determined in step S405 that the ad gets deleted when the event is deleted and/or gets archived when the event is archived. Thereafter, the procedure ends.

The insertion process may be completely decoupled from the channel playlist and may be triggered each time a change of the playback item is due (either due to one item finishing in the playlist and the next one to be started, or due to a channel change).

All video advertisements (infomercials as well as pre-/post-roll ads) may be associated with a displayed overlay graphic prompting for a press of a button on the remote control, either being a link or referral to a branded channel or another video within the system or a transaction (e.g. to order a brochure).

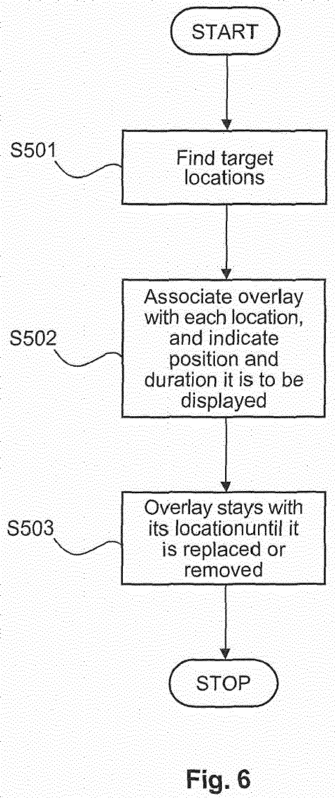

Fig. 6 shows a flow diagram of a process for overlay placement and lifecycle control. In step S501, a target location for a desired overlay is found, e.g. by the auxiliary media scheduler 118. Then, in step S502, the desired overlay is associated with each location and a position and duration for the display of the overlay is indicated. Finally, in step S503, the overlay is determined to stay with its location until it is replaced or removed.

On personalized TV channels an overlay may come up each time the content changes in the channel, or the user starts to interact with the channel. The overlay may show the channel name, the title of the item that is currently being played back and the playback position in that item. Optionally, other information like source, recording time/channel, etc. may also be indicated. Additionally, the overlay may be used to place an icon that makes clear that the user can interact with the content currently being played back. Overlay-related metadata may comprise at least one of graphic (unified or customized), remote control button for action, target action, timestamp in video (if the video has a timestamp for overlays) and targeted videos.

Additionally, an overlay could not only be associated with a video ad, but also with any video content in the system. This association could be dynamic. Use cases could be a TV channel that could have an embedded overlay in the broadcast of a series saying: "Press red to get a behind the scenes look at this show", or an advertiser could give the exact timestamp of when his ad is airing and provide an overlay to be imposed on the live TV ad which will telescope to its branded channel. Dynamic overlay insertion could also be based on user preferences and history as well as other targeting features that are available in the Internet world.

Additionally, banners may be placed for advertising images that are displayed in predefined locations, e.g., throughout the EPG. These pages can be program detail pages, listings (e.g. time, channel, genre etc.), searches, or a zapper.

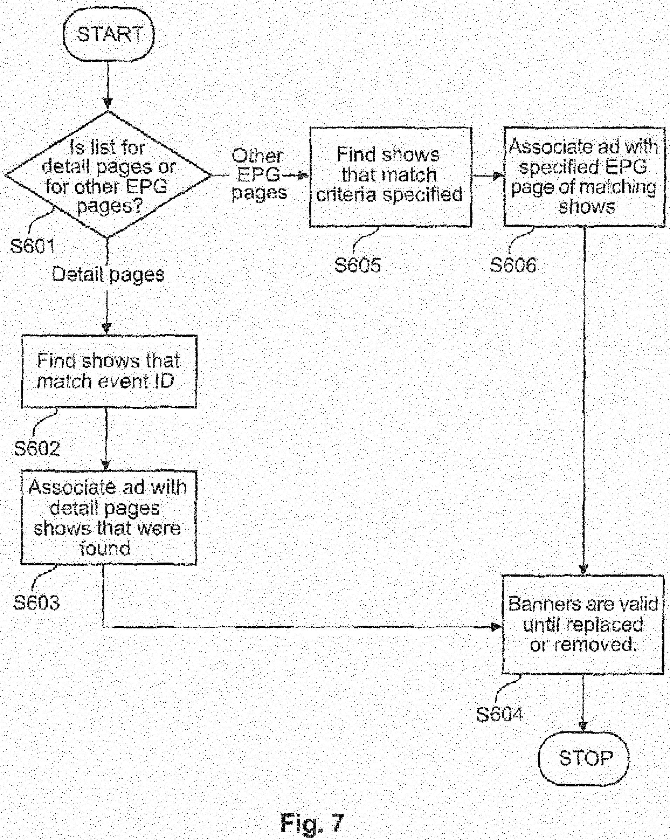

Fig. 7 shows a flow diagram of a process for banner placement and lifecycle control. In step S601 it is checked whether a provided list is to be used for detail pages or for other EPG pages. If it is to be used for detail pages, the procedure proceeds to step S602 where shows are searched that match a related event identification (ID). Then in step S603 the ad is associated with detail pages shows that where found in step S602. The inserted banners are determined in step S604 to be valid until replaced or removed.

Otherwise, if it is determined in step S601 that the list is to be used for other EPG pages, the procedure proceeds to step S605 where shows are searched that match with criteria specified. Then in step S606 the ad is associated with a specified EPG page of matching shows. Finally, the inserted banners are again determined in step S604 to be valid until replaced or removed.

Banner targeting can be explicit and may not involve the recommender. On the server side a list of TV shows may be generated for each banner. It can be targeted towards the program details of the TV show. If advertisers provide generic show criteria (e.g. target genres etc.) matching shows can be found on the server side and a list of these matching shows can be provided. This list can be updated regularly. If multiple ads are targeted to one event, the first match could be picked and displayed.

Banners can be placed to search filters and search results and EPG views, to a channel (e.g. an advertiser may choose to display a banner in channel listing of specific channel, to a normal EPG listing (e.g. time), to a suggested channel list, to an editorial channel, or to a branded channel. Banners can be selected by focusing on them and pressing OK or by simply pressing a dedicated button on the remote control.

Banner-related metadata may comprise at least one of a graphic, a list of associated branded and editorial channels, EPG pages and criteria, a remote control button for action (e.g. focus and select or a specific button (e.g. color button)), a target action, a list of associated events (e.g. for targeting of program descriptions), a list of associated genres (for targeting of EPG filters and searches), targeted videos.

As an additional option, a personalized targeting functionality may be implemented based on previous user behavior and/or preferences which may relate to channel listing (e.g. if the user likes this channel he/she may also like this product/video/channel), a suggested channel list for highlighting one suggested channel that matches user's other channels or preferred events and/or for highlighting a suggested channel whose targeting metadata matches event details (e.g. if the user likes this show, he/she may like this channel). Possible actions of interactive elements may be ordering based on transmission of an address, displaying a phone number or Internet address as a link to program details of an event in the EPG, to an editorial and branded channel or to a video ad.

In the above placement scenarios, the following rules for managing storage space, e.g. of the storage devices 113 and 119 of Fig. 1 may be applied. When a matching ad is found for placement, the ad can be downloaded and positioned in the system. Ads that are matched with events inherit the expiration date of that event and can be deleted thereafter unless archived.

It is noted that the present invention can be applied to recommender systems for set-top boxes, TV sets, mobile phones, personal digital assistants (PDAs), personal computers (PCs) and all devices where recommenders are used to collect, filter, and present content from multiple sources to their users. Additionally, it can be applied on servers or by services on the Internet or any other data network. The invention is thus not restricted to recommenders of television or film content, but can be applied to music, theatre shows, and all types of products and services for which usage data or user action data can be obtained for the recommender.

In summary, an apparatus, method, and computer program product for controlling a recommender system have been described, wherein placement of auxiliary media in relation to at least one content item presented to a user is controlled. A first scheduler is provided for scheduling the at least one content item based on a user profile obtained from a recommender system. Additionally, a second scheduler is provided for scheduling placement of the auxiliary media in response to the first scheduler, wherein the second scheduler is adapted to receive information about a scheduled content from the first scheduler and to decide which auxiliary media to place into a presentation space based on the received information.

While the invention has been illustrated and described in detail in the drawings and the foregoing description, such illustration and description are to be considered illustrative or exemplary and not restrictive. The invention is not limited to the disclosed embodiments. From reading the present disclosure, other modifications will be apparent to persons skilled in the art. Such modifications may involve other features which are already known in the art and which may be used instead of or in addition to features already described herein.

Variations to the disclosed embodiments can be understood and effected by those skilled in the art, from a study of the drawings, the disclosure and the appended claims. In the claims, the word "comprising" does not exclude other elements or steps, and the indefinite article "a" or "an" does not exclude a plurality of elements or steps. A single processor or other unit may fulfil at least the functions of Figs. 2 to 7 based on corresponding software routines. The computer program may be stored/distributed on a suitable medium, such as an optical storage medium or a solid-state medium supplied together with or as part of other hardware, but may also be distributed in other forms, such as via the Internet or other wired or wireless telecommunication systems. The mere fact that certain measures are recited in mutually different dependent claims does not indicate that a combination of these measures cannot be used to advantage. Any reference signs in the claims should not be construed as limiting the scope thereof.

**Claims**

1.  An apparatus for controlling placement of auxiliary media in relation to at least one content item presented to a user, said apparatus comprising:

    a) a first scheduler (111) for scheduling said at least one content item based on a user profile obtained from a recommender system; and
    b) a second scheduler (118) for scheduling placement of said auxiliary media in response to said first scheduler (111),
    c) wherein said second scheduler (118) is adapted to receive information about a scheduled content from said first scheduler (111) and to decide which auxiliary media to place into a presentation space based on said received information
    d) wherein said second scheduler is adapted to detect a trigger event and to insert an item of the auxiliary media to a target object of a content channel in response to a detected trigger event..

2.  The apparatus according to claim 1, wherein said trigger event comprises at least one of a recording of a content item, a deletion of a content item, and an arrival of a new object of the auxiliary media for placement.

3.  The apparatus according to claim 1 or 2, wherein said target object comprises a single show or event within the content channel.

4.  The apparatus according to claim 1 or 2, wherein second scheduler (118) is adapted to map a video advertisement to a predetermined event of a scheduled content and to insert said video advertisement into a content channel as visible programming.

5.  The apparatus according to any one of the preceding claims, wherein said second scheduler (118) is adapted to allocate a priority to items of said auxiliary media based on at least one of targeting information, a prioritization information, a factoring information and a popularity information, wherein said popularity information is determined based on a user rating or by measuring a dropping or watching rate of an item of said auxiliary media.

6.  The apparatus according to claim 5, wherein said prioritization information is determined based on at least one of a watching behaviour of a user in a target channel, a coefficient of popularity, an expected click-through rate, and an expected return.

7.  The apparatus according to any one of the preceding claims, wherein said second scheduler (118) is adapted

    - to store information about the number of placements of an item of said auxiliary media in a content channel and
    - to suppress placement of an item of said auxiliary media if said item has been placed and watched more than a predetermined number of times.

8.  The apparatus according to any one of the preceding claims, wherein said second scheduler (118) is adapted to determine a relevance coefficient which indicates relevance of an item of said auxiliary media, and wherein the item with the highest relevance coefficient is used for placement.

9.  The apparatus according to any one of the preceding claims, wherein said apparatus is adapted to record events of said content items and to create new content channels, and wherein said second scheduler (118) is adapted to determine a location for placement and an item of said auxiliary media that fits in a determined location if placement is allowed.

10. The apparatus according to any one of the preceding claims, wherein said second scheduler (118) is adapted to control said placement of said auxiliary media based on at least one of content profile information and auxiliary media profile information, obtained from a source of said auxiliary media.

11. The apparatus according to any one of the preceding claims, wherein said second scheduler (118) is adapted to determine a ratio between said auxiliary media and said content items for each content channel, wherein said placement of said auxiliary media is scheduled based on said determined ratio.

12. The apparatus according to any one of the preceding claims, wherein said second scheduler (118) is adapted to delete an item of said auxiliary media when a predetermined lifecycle has expired, and wherein said second scheduler (118) is adapted to suppress said deletion if said item is marked with a predetermined information indicating that said item is to be kept.

13. The apparatus according to any one of the preceding claims, wherein said second scheduler (118) is adapted to initiate download of an item of said auxiliary media when said item has been determined as a matching item for placement, and wherein said second scheduler (118) is adapted to delete said item when an expiration time of a matched content item has expired.

14. A method of controlling placement of auxiliary media in relation to at least one content item presented to a user, said method comprising:

a) scheduling said at least one content item in a first scheduler (111) based on a user profile obtained from a recommender system;
b) receiving from said first scheduler (111) information about a scheduled content; and
c) detecting a trigger event by second scheduler.
d) deciding in the second scheduler (118) based on said received information which auxiliary media to place into a presentation space

15. A computer program product comprising code means for producing the steps of method claim 15 when run on a computer device.

Fig. 1

**Fig. 2**

**Fig. 3**

START

S201 — Iterate through all ad control files

S202 — Has ad been placed in this channel before?
- YES
- NO

S203 — Does the targeting rule for the ad match the TV show?
- YES
- NO

S204 — How many results are there?
- 1 result
- more than the 1 result

S205 — Sort results by highest relevance coefficient "A"

S206 — Process only the control files with the highest relevance coefficient "A"

S207 — Is there more than one ad with the highest relevance coefficient "A"?
- NO
- YES

S208 — Iterate through results

S209 — Sort results by highest relevance coefficient "B"

S210 — Is there more than one ad with the highest score?
- NO
- YES

S211 — Let the recommender find the best ad to insert (implicit placement)

S212 — The ad is the one to place

0

Fig. 4

S401 — Has ad previously been placed with the event, or the channel containing the event? — NO

S402 — Has ad been placed more than X times in system — NO

S403 — Associate ad with object

S404 — Place ad with event (if pre-roll, place before event. if post-roll, place after event)

S405 — Ad get deleted when event is deleted / archived when event is archived

STOP

Fig. 5

START

S501 — Find target locations

S502 — Associate overlay with each location, and indicate position and duration it is to be displayed

S503 — Overlay stays with its location until it is replaced or removed

STOP

**Fig. 6**

**Fig. 7**

Europäisches
Patentamt

European
Patent Office

Office européen
des brevets

**EUROPEAN SEARCH REPORT**

Application Number

EP 17 16 8836

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/097657 A1 (ZHOU YIMING [US] ET AL) 22 May 2003 (2003-05-22) | 1-4, 7-10, 12-15 | INV. H04N7/173 G06Q30/02 |
| Y | * figures 1, 2 * <br> * paragraph [0016] - paragraph [0018] * <br> * paragraph [0026] - paragraph [0028] * <br> * paragraph [0060] - paragraph [0067] * <br> * paragraph [0132] - paragraph [0146] * <br> * paragraph [0154] - paragraph [0171] * <br> ----- | 5,6,11 | H04N21/258 H04N21/262 H04N21/2668 H04N21/442 H04N21/458 H04N21/466 H04N21/475 |
| X | WO 2007/065069 A2 (ALCATEL LUCENT [FR]; RAO KASHIPATI G [US]; HE JIANG [US]) 7 June 2007 (2007-06-07) | 1-3,5-8, 10,14,15 | H04N21/482 H04N21/81 |
| Y | * figures 1-3 * <br> * page 4, line 10 - line 25 * <br> * page 6, line 5 - page 8, line 10 * <br> * page 8, line 25 - page 11, line 9 * <br> ----- | 11-13 | |
| X | US 2008/114861 A1 (GILDRED JOHN T [US]) 15 May 2008 (2008-05-15) | 1,4,8, 10,14,15 | |
| Y | * figures 5, 7, 8, 20, 27 * <br> * paragraph [0066] - paragraph [0074] * <br> * paragraph [0262] - paragraph [0263] * <br> ----- | 11-13 | TECHNICAL FIELDS SEARCHED (IPC) |
| X | US 2007/180478 A1 (DOI MIWAKO [JP] ET AL) 2 August 2007 (2007-08-02) * figures 1-4, 6, 8, 11-13, 16, 17 * * paragraph [0055] - paragraph [0074] * * paragraph [0081] - paragraph [0082] * ----- | 1,8,10, 14,15 | H04N G06Q H04H G06F |
| Y | US 2006/259357 A1 (CHIU FU-SHENG [TW]) 16 November 2006 (2006-11-16) | 5,6 | |
| A | * figures 1-3 * <br> * paragraph [0030] - paragraph [0034] * <br> * paragraph [0046] - paragraph [0060] * <br> ----- | 1-4,7-15 | |

-/--

The present search report has been drawn up for all claims

| Place of search | Date of completion of the search | Examiner |
|---|---|---|
| Munich | 13 June 2017 | Döttling, Martin |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

Europäisches
Patentamt

European
Patent Office

Office européen
des brevets

# EUROPEAN SEARCH REPORT

Application Number

EP 17 16 8836

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2005/086865 A2 (SCHILLER JAY B [US]; HALVERSON CHRISTOPHER RONALD [US]; POOLE ANDREW J) 22 September 2005 (2005-09-22)<br>* figures 1-5 *<br>* paragraph [0032] - paragraph [0045] *<br>* paragraph [0057] - paragraph [0063] *<br>----- | 1-15 | |
| A | GB 2 445 585 A (MOB ADS LTD [GB])<br>16 July 2008 (2008-07-16)<br>* figures 1, 2 *<br>* page 3, line 27 - page 4, line 30 *<br>* page 6, line 11 - line 29 *<br>* page 8, line 11 - line 22 *<br>----- | 1-15 | |

TECHNICAL FIELDS
SEARCHED      (IPC)

The present search report has been drawn up for all claims

| Place of search | Date of completion of the search | Examiner |
|---|---|---|
| Munich | 13 June 2017 | Döttling, Martin |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 17 16 8836

This annex lists the patent family members relating to the patent documents cited in the above-mentioned European search report.
The members are as contained in the European Patent Office EDP file on
The European Patent Office is in no way liable for these particulars which are merely given for the purpose of information.

13-06-2017

| Patent document cited in search report | | Publication date | Patent family member(s) | | Publication date |
|---|---|---|---|---|---|
| US 2003097657 | A1 | 22-05-2003 | NONE | | |
| WO 2007065069 | A2 | 07-06-2007 | CN | 1976287 A | 06-06-2007 |
| | | | EP | 1806693 A1 | 11-07-2007 |
| | | | JP | 2009518888 A | 07-05-2009 |
| | | | WO | 2007065069 A2 | 07-06-2007 |
| US 2008114861 | A1 | 15-05-2008 | AU | 2008205213 A1 | 17-07-2008 |
| | | | CA | 2674346 A1 | 17-07-2008 |
| | | | CN | 101682734 A | 24-03-2010 |
| | | | EP | 2116054 A2 | 11-11-2009 |
| | | | EP | 2413601 A1 | 01-02-2012 |
| | | | JP | 2010516108 A | 13-05-2010 |
| | | | US | 2008114861 A1 | 15-05-2008 |
| | | | WO | 2008086070 A2 | 17-07-2008 |
| US 2007180478 | A1 | 02-08-2007 | CN | 101014116 A | 08-08-2007 |
| | | | JP | 4481939 B2 | 16-06-2010 |
| | | | JP | 2007208435 A | 16-08-2007 |
| | | | KR | 20070078967 A | 03-08-2007 |
| | | | US | 2007180478 A1 | 02-08-2007 |
| US 2006259357 | A1 | 16-11-2006 | NONE | | |
| WO 2005086865 | A2 | 22-09-2005 | AU | 2005221100 A1 | 22-09-2005 |
| | | | CA | 2558488 A1 | 22-09-2005 |
| | | | EP | 1728389 A2 | 06-12-2006 |
| | | | JP | 4995713 B2 | 08-08-2012 |
| | | | JP | 2007528680 A | 11-10-2007 |
| | | | US | 2012030704 A1 | 02-02-2012 |
| | | | WO | 2005086865 A2 | 22-09-2005 |
| GB 2445585 | A | 16-07-2008 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• WO 2002033975 A